# EUROPEAN PATENT SPECIFICATION

(11) **EP 4 421 333 B1**
(45) Date of publication and mention of the grant of the patent: **25.02.2026**
(21) Application number: 24186654.0
(22) Date of filing: 22.03.2021
(51) Int. Cl.: F16B 5/06, F16B 21/08, F16B 5/12

(54) **FASTENER AND ARRANGEMENT COMPRISING A FASTENER**
BEFESTIGUNGSELEMENT UND ANORDNUNG MIT EINEM BEFESTIGUNGSELEMENT
ÉLÉMENT DE FIXATION ET AGENCEMENT COMPRENANT UN ÉLÉMENT DE FIXATION

(43) Date of publication of application: 28.08.2024
(62) Divisional of application: 21164055.2
(73) Proprietor: Newfrey LLC, New Britain, CT 06053 (US)
(72) Inventor: KEMPF, Christian, 35394 Gießen (DE); ROSEMANN, Frank, 35394 Gießen (DE)
(74) Representative: SBD IPAdmin

(56) References cited:
- DE-A1- 102014 103 651
- US-A1- 2014 064 880
- US-A1- 2015 152 910

## Description

The present invention relates to a fastener for the fastening of an attaching or covering part to a supporting part comprising a stud, in particular a part of the body of a motor vehicle. The present invention is further directed to an arrangement comprising a fastener, an attaching or covering part and a supporting part.

Fastening clips and fasteners are primarily used in automotive manufacture in order to attach mounted parts or trim parts to the body or to body parts such as door or the like. It should be possible to accomplish the attachment as easily as possible and without the aid of tools here, but the attachment should also be releasable in order to be able to carry out maintenance and repairs. On the one hand, the attachment should ensure high retention forces, but, on the other hand, it should permit non-destructive removal force. Moreover, it is frequently necessary to compensate for dimensional deviations in the parts in the region of the fasteners.

It is known to fasten an attaching or a covering part, and notably a trim strip to the body of a motor vehicle by using a stud and a fastener. A resilient clip is interlocked with a stud that is welded to a body panel.

DE102009014133 discloses a fastener for attaching a component to a stud associated with a support component comprising a base defining an opening for accepting the stud, wherein the opening has an axis and has a fastening region and an unlocking region located next to one another in a direction perpendicular to the axis. The fastening region has a resilient retaining flange configured to hold the stud in place when the stud is disposed in the fastening region, wherein the stud can be introduced into the fastening region in a direction generally parallel to the axis of the opening. The stud located in the fastening region can be displaced along a displacement path into the unlocking region by a relative movement of the stud perpendicular to the axis of the opening. In the unlocking region the stud can be removed from the opening.

EP0489505A1 is directed to a metal stud and a resilient clip. The resilient clip is provided with at least two retaining members and an aperture provided with steps corresponding to steps provided on a shoulder of the stud.

US 2014/064880 A1 discloses a fastening element for fastening an attachment on a vehicle body which includes a basic body having a recess and multiple spring tongues arranged in the recess, wherein the multiple spring tongues are constructed for holding the fastening element on a fastening bolt arranged on the vehicle body and received in the recess, wherein the recess has two opening regions enabling connection of the fastening element with the fastening bolt in at least two joining directions.

It is an object of the present invention to provide a fastener that permits a high retention force while also permitting a low removal force and which can easily be used with different studs, and more particularly a fastener which is reliable independently of the geometry of the stud.

Accordingly, the present invention provides a fastener according to claim 1.

Such fastener is adapted to be used with studs having a threaded shaft or with stud having an unthreaded shaft and a flange or head. The first and second fins allow reliability and adaptability. More particularly, such fastener can be used with stud having a threaded shaft with a pitch between 0,5 and 1,8 mm, but also with a stud having a non-threaded shaft and a head with an under-head flange angle with regard to the longitudinal axis between 90 and 170 degrees. The exact same fastener can thus be used with different stud geometries.

In an embodiment the main body comprises a cap, a first lateral wall, a third lateral wall and a second lateral wall extending between the first and the third lateral walls, wherein the walls and the cap define the cavity, and the first end of the locking finger is connected to the first wall.

In an embodiment, a second resilient locking finger is provided with a first end connected to the third wall, a second end extending within the cavity and a catching portion comprising a first and a second fin separated by a gap, wherein the first and second fins face the cavity and the fins and the gap are adapted to support a threaded shaft of a stud and/or the head of a stud. The second resilient finger is for instance similar to the first resilient finger and increases the retention forces.

In an embodiment, the walls comprise an interior surface facing the cavity and an external surface opposite the internal surface, and wherein the first end of the first and/or second resilient locking finger extends from the internal surface.

In an embodiment, the locking finger extends from the main body along a finger axis which is inclined with regard to the longitudinal axis, and more particularly the locking fingers form an angle between 5 and 40 degrees with regard to the longitudinal axis.

In an embodiment, the catching portion is in the vicinity of the second end, and more particularly the catching portion is arranged between the second end and ¼ of the total length of the locking finger along the finger axis from the second end.

In an embodiment, the length of the locking finger along the finger axis is 50% to 80% of the total length of the cavity along the longitudinal axis.

In an embodiment, the locking finger has an enlarged cross-section at its first end.

In an embodiment, each fin is wedge-shaped and comprises a thin edge at one end, the thin edge facing the cavity and being adapted to contact the stud, wherein the gap has a V-shape in cross-section.

In an embodiment, the distance between the thin edge of the first fin and the thin edge of the second fin is between 0.5 mm and 2.0 mm, and preferably is of 1.8 mm. This distance allows flexibility without decreasing the retention forces. Indeed, such distance enable the use of the same fastener for different stud geometries.

In an embodiment, the second fastening section comprises a groove adapted to receive an attaching or covering part, and in particular the second fastening section comprises two grooves for receiving an attaching or covering part. First and second sections can work together to increase the retention forces.

The present invention is also directed to an arrangement comprising a fastener as disclosed above, an attaching or covering part having a C-shape and adapted to be attached to the second fastening section, and a supporting part with a stud, wherein the stud is arranged within the cavity and the fins and the gap grip the stud.

In an embodiment, a first elastic tongue extends from the main body toward the supporting part.

In an embodiment, the fastener comprises a first and a second locking finger, and wherein the fins securely hold the stud within the cavity.

A specific embodiment of the present invention will now be described, by way of example only and with reference to the accompanying drawings, of which:
Fig. 1 shows a covering part, a supporting part and a fastener receiving a threaded stud with a coarse thread;
Fig. 2 shows a covering part, a supporting part and the fastener of Fig. 1 receiving a threaded stud with a metric thread;
Fig. 3 shows a covering part, a supporting part and the fastener of Fig. 1 receiving a non-threaded stud with a head.

Corresponding reference numerals indicate corresponding parts throughout the several views of the drawings.

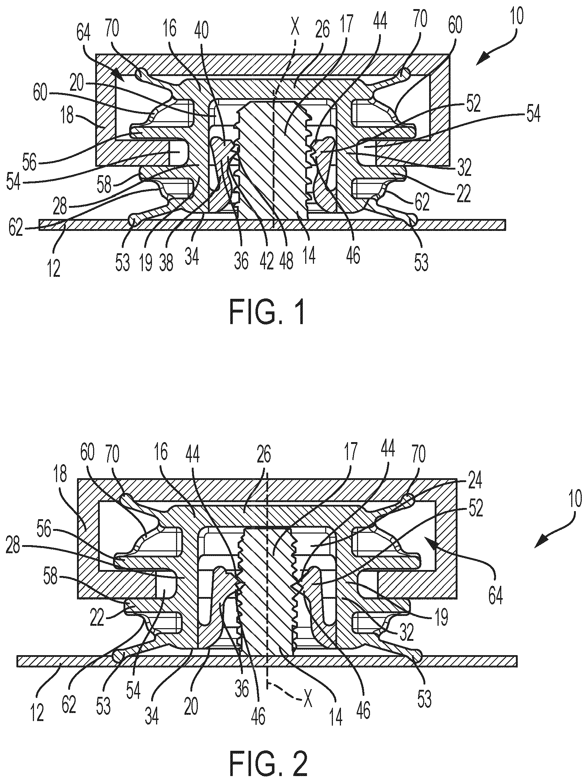

Fig. 1, Fig. 2 and Fig. 3 show an arrangement 10 comprising a supporting part 12 with a stud 14, a fastener 16 connected to the stud 14 and an attaching or covering part 18 connected to the fastener 16.

In Fig. 1 the stud 14 comprises a threaded shaft 17 with a coarse thread, for instance a T6 or T5 thread. In Fig. 2, the stud 14 comprises a threaded shaft 17 with a metric thread, for example a M6. In other embodiments, other threads may be implemented. More particularly, as better described below, the threaded shaft of the stud has a pitch between 0,5 and 1,8 mm.

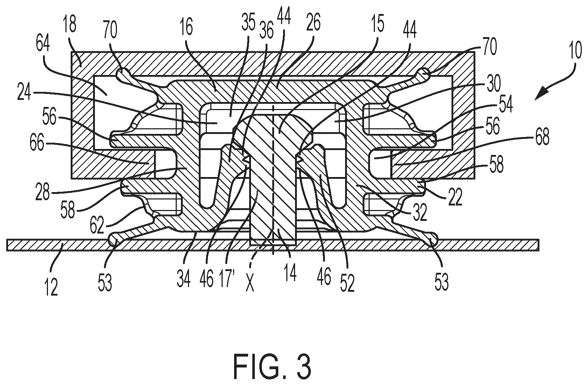

In another embodiment, as depicted in Fig. 3, the shaft 17' of the stud 14 is non-threaded, and the stud 14 comprises a head 15 with an under-head flange angle with regard to the longitudinal axis between 90 and 170 degrees.

The stud 14 is for example welded or glued to the supporting part 12.

The fastener 16 is made of plastic material. The fastener 16 is a one-part fastener. The fastener 16 comprises a main body 19 with a first fastening section 20 adapted to be connected to the stud and a second fastening section 22 adapted to be connected to the covering part 18.

The first fastening section 20 comprises a cavity 24 adapted to receive the stud 14. The cavity 24 extends longitudinally along a longitudinal axis X. The cavity 24 is for instance delimited by a cap 26, a first wall 28, a second wall 30 and a third wall 32. The second wall 30 extends between the first and the third wall 28, 32. The cap 26 extends on the top of the first, second and third wall 28, 30, 32. The cavity 24 is axially and laterally accessible. The cavity is axially accessible through the bottom 34 of the main body 19, the bottom 34 being opposite the cap 26. The cavity 24 is further laterally accessible through the opening 35 provided between the first and third walls 28, 32. In other words, the cavity is not closed by a fourth wall. The fourth lateral side of the cavity 24 is open. The cavity 24 is for example parallelepipedal. But, in another embodiment, the cavity may be cylindrical, frustroconical, .... The height of the cavity along the longitudinal axis X is greater than the length of the stud 14.

A resilient locking finger 36 extends within the cavity 24. The resilient locking finger 36 comprises a first end 38 extending from the main body 19 and a second end 40. The first end 38 extends from the bottom or free edge of the first wall 28. The first end 38 comprises an enlarged cross-section with regard to the rest of the resilient locking finger. The enlarged cross section prevent to form a weak portion. Indeed, the resilient locking finger is movable between a rest position and a mounted position. In the mounted position, the resilient locking finger 36 is elastically deformed and the first end, connected to the main body has to withstand a higher mechanical stress than the rest of the resilient locking finger 36. The second end 40 is a free end. The second end extends in the cavity 24. The resilient locking finger 36 extends along a finger axis and, in a rest position of the resilient locking finger 36, the finger axis and the longitudinal axis X form an angle between 5 and 40 degrees. The length of the locking finger 36 along the finger axis is 50% to 80% of the total length of the cavity along the longitudinal axis X. The resilient locking finger 36 comprises a catching portion 42 adapted to engage with the stud 14 in order to fix the fastener to the supporting part, and more particularly to interconnect stud and fastener. The catching portion 42 is in the vicinity of the second end 40, and more particularly the catching portion 42 is arranged between the second end 40 and ¼ of the total length of the locking finger along the finger axis from the second end. The catching portion 42 comprises a first fin 44 and a second fin 46. The first and the second fins are separated by a gap 48. Each fin is wedge-shaped and comprises a thin edge 50 at one end, the thin edge facing the cavity and being adapted to contact the stud, wherein the gap has a V-shape in cross-section. The gap forms an angle A in cross section in the range of 2 to 80 deg. The distance between the thin edge 50 of the first fin 44 and the thin edge 50 of the second fin 46 is between 0.5 mm and 2.0 mm, and preferably is of 1.8 mm. Such distance notably allows to support a threaded shaft of a stud with a pitch between 0,5 and 1,8 mm and/or the flange of a stud having a under-head flange angle with regard to the longitudinal axis between 90 and 170 degrees.

Actually the resilient locking finger is a first resilient locking finger 36, and a second resilient locking finger 52 is provided. The second resilient locking finger 36 is similar to first resilient locking finger. The second resilient locking finger 36 comprises a first end 38 extending from the main body 19 and a second end 40. The first end extends from the bottom of the third wall. The first end 38 comprises an enlarged cross-section with regard to the rest of the second resilient locking finger, in order to withstand a higher mechanical stress. The second end 40 is a free end. The second end extends in the cavity. The second resilient locking finger 50 extends along a finger axis and, in a rest position of the second resilient locking finger, the finger axis and the longitudinal axis form an angle between 5 and 40 degrees. The length of the second resilient locking finger along the finger axis is 50% to 80% of the total length of the cavity along the longitudinal axis. The second resilient finger comprises a catching portion 42 adapted to engage with the stud in order to fix the fastener to the supporting part. The catching portion 42 is in the vicinity of the second end 40, and more particularly the catching portion 42 is arranged between the second end 40 and ¼ of the total length of the second resilient locking finger along the finger axis from the second end. The catching portion 42 comprises a first fin 44 and a second fin 46. The first and the second fins are separated by a gap 48. Each fin is wedge-shaped and comprises a thin edge 50 at one end, the thin edge facing the cavity and being adapted to contact the stud, wherein the gap has a V-shape in cross-section. The gap forms an angle A in cross section in the range of 2 to 80 deg. The distance between the thin edge 50 of the first fin 44 and the thin edge 50 of the second fin 46 is between 0.5 mm and 2.0 mm, and preferably is of 1.8 mm. Such distance notably allows to support a threaded shaft of a stud with a pitch between 0,5 and 1,8 mm and/or the flange of a stud having a under-head flange angle with regard to the longitudinal axis between 90 and 170 degrees.

First and second resilient fingers 36, 50 are facing each other. In another embodiment, a third resilient finger (not represented), extending from the second wall 30 may be provided.

In Fig. 1 and Fig. 2, the fins and the gap cooperate with the thread of the shaft to hold the stud, notably along the longitudinal axial. In Fig. 3, the fins 44, 46 rest on the head 15 of the stud. More particularly the head 15 has an under head flange and the fins 44, 46 rest on the under-head flange of the stud 14. Thus, the resilient locking fingers 36, 52 lock the stud 14, independently of the type of stud.

At the outskirts of the cavity 24, for instance extending from the edge of the first and/or third wall, a first elastic tongue 53 may be provided. Actually a first first elastic tongue 53 may be provided extending from the first wall and a second first elastic tongue 53 may be provided from the third wall. These allow tolerance compensation.

The second fastening section for the fastening of an attaching or covering part comprises as depicted in the Fig. 1 to Fig. 3 a groove 54. The groove 54 is adapted to receive the attaching or covering part. The groove 54 is for instance arranged on the outside surface of the main body, opposite the cavity 24. The groove 54 is sensibly arranged in the middle of the first and/or third wall 28, 32. The groove 54 is formed with a first and a second protrusion 56, 58. The protrusions 56, 58 extend from the wall and are spaced apart. The protrusions 56, 58 are for instance parallel to each other. The first protrusion 56 may be connected to the cap 26 through a reinforcement portion 60. The second protrusion 58 may be connected to the edge of the first or third wall 28, 32 through a reinforcement portion 62. The first protrusion 56 is for instance longer than the second protrusion 58.

For instance, the attaching or covering part 18 has a C-shape with an aperture 64 and two free ends 66, 68, and the second fastening section 22 comprises two grooves 54, each groove 54 receiving a free end 66, 68 of the attaching or covering part 18. The aperture 18 received the cap 26 of the main body 19. The first and second fastening sections 20, 22 may cooperate together as notably described in EP19216707.0.

The cap 26 of the main body 19 may be provided on its outside surface, opposite the cavity, with a second elastic tongue 70. The second elastic tongue 70 extends from an edge of the cap 26.

The fastener 16 as depicted in Fig. 1 to Fig. has a symmetrical plane. However, in another embodiment, the fastener 16 may not be provided with a symmetrical plane.

In an assembled position, the fastener 16 being mounted on the stud, the first elastic tongue(s) extend(s) toward the supporting part. The second elastic part extends toward the attaching or covering part. First and second elastic tongues are provided to compensate tolerance play.

As previously mentioned, the cavity 24 is axially and laterally accessible. More particularly the fastener 16 can be mounted on the stud by a relative movement of the stud along the longitudinal axis X until the stud fully sits in the cavity and the resilient locking finger(s) support the stud. In such position, the first elastic tongue rests on the supporting part.

In order to remove the fastener 16 from the stud 14, without damaging the fastener 16, a relative movement of the stud 14 perpendicular to the longitudinal axis X is realized.

## Claims

1. Fastener (16) for the fastening of an attaching or covering part (18) to a supporting part (12) comprising a stud (14), in particular a part of the body of a motor vehicle, wherein the fastener (16) comprises a main body (19) with:
- a first fastening section (20) comprising a cavity (24) delimited by a cap (26), a first wall (28), a second wall (30) and a third wall (32) and adapted to receive the stud (14), the cavity (24) longitudinally extending along a longitudinal axis (X), and at least one resilient locking finger (36, 52) having a first end (38) connected to the main body (19), a second end (40) extending within the cavity (24) and a catching portion (42) adapted to engage with the stud (14) in order to fix the fastener (16) to the supporting part (12),
- a second fastening section (22) for the fastening of an attaching or covering part (18), wherein the cavity (24) is laterally and axially accessible, such that the stud (14) can be axially along the longitudinal axis (X) or laterally mounted, and **characterized in that** the catching portion (42) comprises a first and a second fin (44, 46) separated by a gap (48), wherein the first and second fins (44, 46) face the cavity (24) and the fins (44, 46) and the gap (48) are adapted to support a threaded shaft (17) of a stud and/or the head (15) of a stud,
and **in that** the cap (26) is provided on its outside surface, opposite the cavity (24), with an elastic tongue (70).

2. Fastener (16) according to claim 1, wherein the first end of the resilient locking finger (36) is connected to the first wall (28).

3. Fastener (16) according to claim 2, wherein a second resilient locking finger (52) is provided with a first end (38) connected to the third wall, a second end (40) extending within the cavity (24) and a catching portion (42) comprising a first and a second fin (44, 46) separated by a gap (48), wherein the first and second fins (44, 46) face the cavity (24) and the fins and the gap are adapted to support a threaded shaft (17) of a stud and/or the head (15) of a stud.

4. Fastener (16) according to claim 2 or 3, wherein the walls (28, 30, 32) comprise an interior surface facing the cavity(24) and an external surface opposite the internal surface, and wherein the first end (38) of the first and/or second resilient locking finger (36, 52) extends from the internal surface.

5. Fastener (16) according to any of claims 1 to 4, wherein the resilient locking finger (36, 52) extends from the main body (19) along a finger axis which is inclined with regard to the longitudinal axis (X), and more particularly the resilient locking finger forms an angle between 5 and 40 degrees with regard to the longitudinal axis (X).

6. Fastener (16) according to claim 5, wherein the catching portion (42) is in the vicinity (24) of the second end, and more particularly the catching portion (42) is arranged between the second end and ¼ of the total length of the resilient locking finger (36, 52) along the finger axis from the second end.

7. Fastener (16) according to claim 5 or claim 6, wherein the length of the resilient locking finger (36, 52) along the finger axis is 50% to 80% of the total length of the cavity (24) along the longitudinal axis (X).

8. Fastener (16) according to any of claims 1 to 6, wherein the resilient locking finger (36, 52) has an enlarged cross-section at its first end (38).

9. Fastener (16) according to any of claims 1 to 8, wherein each fin (44, 46) is wedge-shaped and comprises a thin edge at one end, the thin edge facing the cavity (24) and being adapted to contact the stud (14), wherein the gap (48) has a V-shape in cross-section.

10. Fastener (16) according to claim 9, wherein the distance between the thin edge of the first fin (44) and the thin edge of the second fin (46) is between 0.5 mm and 2.0 mm, and preferably is of 1.8 mm.

11. Fastener (16) according to any of claims 1 to 10, wherein the second fastening section (22) comprises a groove (54) adapted to receive an attaching or covering part, and in particular the second fastening section comprises two grooves (54) for receiving an attaching or covering part.

12. Arrangement (10) comprising a fastener (16) according to any of claims 1 to 11, an attaching or covering part (18) having a C-shape and adapted to be attached to the second fastening section (22), and a supporting part (12) with a stud (14), wherein the stud (14) is arranged within the cavity (24) and the fins (44, 46) and the gap (48) grip the stud (14).

13. Arrangement (10) according to claim 12, wherein the elastic tongue (70) provided on the outside surface of the cap is a second elastic tongue, and wherein a first elastic tongue (53) extends from the main body (19) toward the supporting part (12).

14. Arrangement (10) according to claim 12 or claim 13, wherein the fastener (16) comprises a first and a second resilient locking finger (36, 52), and wherein the fins securely hold the stud (14) within the cavity (24).

## Patentansprüche

1. Befestigungselement (16) zum Befestigen eines Anbau- oder Verkleidungsteils (18) an einem einen Bolzen (14) umfassenden Trägerteil (12), insbesondere einem Teil der Karosserie eines Kraftfahrzeugs, wobei das Befestigungselement (16) einen Hauptkörper (19) umfasst, mit:
- einem ersten Befestigungsabschnitt (20), welcher einen Hohlraum (24) umfasst, der von einer Kappe (26), einer ersten Wand (28), einer zweiten Wand (30) und einer dritten Wand (32) begrenzt ist, und angepasst ist, um den Bolzen (14) aufzunehmen, wobei sich der Hohlraum (24) in Längsrichtung entlang einer Längsachse (X) erstreckt, und mindestens einen federnden Verriegelungsfinger (36, 52), der ein erstes Ende (38), das mit dem Hauptkörper (19) verbunden ist, ein zweites Ende (40), das sich innerhalb des Hohlraums (24) erstreckt, und einen Fangabschnitt (42) aufweist, der angepasst ist, um in den Bolzen (14) einzugreifen, um das Befestigungselement (16) an dem Trägerteil (12) zu befestigen,
- einen zweiten Befestigungsabschnitt (22) zum Befestigen eines Anbau- oder Verkleidungsteils (18), wobei der Hohlraum (24) lateral und axial zugänglich ist, sodass der Bolzen (14) axial entlang der Längsachse (X) oder lateral montiert werden kann, und **dadurch gekennzeichnet, dass** der Fangabschnitt (42) eine erste und eine zweite Lamelle (44, 46) umfasst, welche durch einen Spalt (48) getrennt sind, wobei die erste und zweite Lamelle (44, 46) dem Hohlraum (24) zugewandt sind und die Lamellen (44, 46) und der Spalt (48) dazu angepasst sind, einen Gewindeschaft (17) eines Bolzens und/oder den Kopf (15) eines Bolzens zu stützen,
und dadurch, dass die Kappe (26) an seiner äußeren Oberfläche, gegenüber dem Hohlraum (24) mit einer elastischen Zunge (70) bereitgestellt ist.

2. Befestigungselement (16) nach Anspruch 1, wobei das erste Ende des federnden Verriegelungsfingers (36) mit der ersten Wand (28) verbunden ist.

3. Befestigungselement (16) nach Anspruch 2, wobei ein zweiter federnder Verriegelungsfinger (52) mit einem ersten Ende (38), das mit der dritten Wand verbunden ist, einem zweiten Ende (40), das sich innerhalb des Hohlraums (24) erstreckt, und einem Fangabschnitt (42), der eine erste und eine zweite Lamelle (44, 46) umfasst, welche durch einen Spalt (48) getrennt sind, versehen ist, wobei die erste und zweite Lamelle (44, 46) dem Hohlraum (24) zugewandt sind und die Lamellen und der Spalt dazu angepasst sind, einen Gewindeschaft (17) eines Bolzens und/oder den Kopf (15) eines Bolzens zu stützen.

4. Befestigungselement (16) nach Anspruch 2 oder 3, wobei die Wände (28, 30, 32) eine dem Hohlraum (24) zugewandte Innenfläche und eine der Innenfläche gegenüberliegende Außenfläche umfassen, und wobei das erste Ende (38) des ersten und/oder zweiten federnden Verriegelungsfingers (36, 52) sich von der Innenfläche erstreckt.

5. Befestigungselement (16) nach einem der Ansprüche 1 bis 4, wobei sich der federnde Verriegelungsfinger (36, 52) von dem Hauptkörper (19) entlang einer Fingerachse erstreckt, welche in Bezug auf die Längsachse (X) geneigt ist, und insbesondere der federnde Verriegelungsfinger in Bezug auf die Längsachse (X) einen Winkel zwischen 5 und 40 Grad bildet.

6. Befestigungselement (16) nach Anspruch 5, wobei sich der Fangabschnitt (42) in der Nähe (24) des zweiten Endes befindet, und insbesondere der Fangabschnitt (42) zwischen dem zweiten Ende und 1/4 der Gesamtlänge des federnden Verriegelungsfingers (36, 52) entlang der Fingerachse von dem zweiten Ende aus angeordnet ist.

7. Befestigungselement (16) nach Anspruch 5 oder Anspruch 6, wobei die Länge des federnden Verriegelungsfingers (36, 52) entlang der Fingerachse 50% bis 80% der Gesamtlänge des Hohlraums (24) entlang der Längsachse (X) beträgt.

8. Befestigungselement (16) nach einem der Ansprüche 1 bis 6, wobei der federnde Verriegelungsfinger (36, 52) an seinem ersten Ende (38) einen vergrößerten Querschnitt aufweist.

9. Befestigungselement (16) nach einem der Ansprüche 1 bis 8, wobei jede Lamelle (44, 46) keilförmig ist und an einem Ende eine dünne Kante umfasst, wobei die dünne Kante dem Hohlraum (24) zugewandt ist und zum Kontakt mit dem Bolzen (14) angepasst ist, wobei der Spalt (48) einen V-förmigen Querschnitt aufweist.

10. Befestigungselement (16) nach Anspruch 9, wobei der Abstand zwischen der dünnen Kante der ersten Lamelle (44) und der dünnen Kante der zweiten Lamelle (46) zwischen 0,5 mm und 2,0 mm beträgt, und bevorzugt 1,8 mm beträgt.

11. Befestigungselement (16) nach einem der Ansprüche 1 bis 10, wobei der zweite Befestigungsabschnitt (22) eine Nut (54) umfasst, welche dazu angepasst ist ein Anbau- oder Verkleidungsteil aufzunehmen, und insbesondere der zweite Befestigungsabschnitt zwei Nuten (54) zum Aufnehmen eines Anbau- oder Verkleidungsteils umfasst.

12. Anordnung (10), umfassend ein Befestigungselement (16) nach einem der Ansprüche 1 bis 11, ein Anbau- oder Verkleidungsteil (18), welches eine C-Form aufweist und dazu angepasst ist, an dem zweiten Befestigungsabschnitt (22) angebracht zu werden, und ein Trägerteil (12) mit einem Bolzen (14), wobei der Bolzen (14) innerhalb des Hohlraums (24) angeordnet ist und die Lamellen (44, 46) und der Spalt (48) den Bolzen (14) umgreifen.

13. Anordnung (10) nach Anspruch 12, wobei die elastische Zunge (70), die an der äußeren Oberfläche der Kappe bereitgestellt ist, eine zweite elastische Zunge ist, und wobei sich eine erste elastische Zunge (53) vom Hauptkörper (19) in Richtung des Trägerteils (12) erstreckt.

14. Anordnung (10) nach Anspruch 12 oder Anspruch 13, wobei das Befestigungselement (16) einen ersten und einen zweiten federnden Verriegelungsfinger (36, 52) umfasst, und wobei die Lamellen den Bolzen (14) sicher in dem Hohlraum (24) halten.

## Revendications

1. Dispositif de fixation (16) pour la fixation d'une pièce de fixation ou de recouvrement (18) sur une pièce de support (12) comprenant un goujon (14), en particulier une pièce de la carrosserie d'un véhicule à moteur, dans lequel le dispositif de fixation (16) comprend un corps principal (19) avec :
- une première section de fixation (20) comprenant une cavité (24) délimitée par un capuchon (26), une première paroi (28), une deuxième paroi (30) et une troisième paroi (32) et adaptée pour recevoir le goujon (14), la cavité (24) s'étendant longitudinalement le long d'un axe longitudinal (X) et au moins un doigt de verrouillage élastique (36, 52) présentant une première extrémité (38) reliée au corps principal (19), une seconde extrémité (40) s'étendant à l'intérieur de la cavité (24) et une partie d'accrochage (42) adaptée pour venir en prise avec le goujon (14) afin de fixer le dispositif de fixation (16) à la partie de support (12),
- une seconde section de fixation (22) pour la fixation d'une pièce de fixation ou de recouvrement (18), dans lequel la cavité (24) est accessible latéralement et axialement de telle sorte que le goujon (14) puisse être monté axialement le long de l'axe longitudinal (X) ou monté latéralement, et **caractérisé en ce que** la partie d'accrochage (42) comprend une première et une seconde ailette (44, 46) séparées par un espace (48), dans lequel les première et seconde ailettes (44, 46) font face à la cavité (24) et les ailettes (44, 46) et l'espace (48) sont adaptés pour supporter un arbre fileté (17) d'un goujon et/ou la tête (15) d'un goujon,
et **en ce que** le capuchon (26) est pourvu sur sa surface extérieure, opposée à la cavité (24), d'une languette élastique (70).

2. Dispositif de fixation (16) selon la revendication 1, dans lequel la première extrémité du doigt de verrouillage élastique (36) est reliée à la première paroi (28).

3. Dispositif de fixation (16) selon la revendication 2, dans lequel un second doigt de verrouillage élastique (52) est pourvu d'une première extrémité (38) reliée à la troisième paroi, d'une seconde extrémité (40) s'étendant à l'intérieur de la cavité (24) et d'une partie d'accrochage (42) comprenant une première et une seconde ailette (44, 46) séparées par un espace (48), dans lequel les première et seconde ailettes (44, 46) font face à la cavité (24) et les ailettes et l'espace sont adaptés pour supporter un arbre fileté (17) d'un goujon et/ou la tête (15) d'un goujon.

4. Dispositif de fixation (16) selon la revendication 2 ou 3, dans lequel les parois (28, 30, 32) comprennent une surface interne faisant face à la cavité (24) et une surface externe opposée à la surface interne et dans lequel la première extrémité (38) des premier et/ou second doigts de verrouillage élastiques (36, 52) s'étend depuis la surface interne.

5. Dispositif de fixation (16) selon l'une quelconque des revendications 1 à 4, dans lequel le doigt de verrouillage élastique (36, 52) s'étend depuis le corps principal (19) le long d'un axe de doigt qui est incliné par rapport à l'axe longitudinal (X) et, plus particulièrement, le doigt de verrouillage élastique forme un angle compris entre 5 et 40 degrés par rapport à l'axe longitudinal (X).

6. Dispositif de fixation (16) selon la revendication 5, dans lequel la partie d'accrochage (42) est au voisinage (24) de la seconde extrémité et, plus particulièrement, la partie d'accrochage (42) est agencée entre la seconde extrémité et 1/4 de la longueur totale du doigt de verrouillage élastique (36, 52) le long de l'axe du doigt à partir de la seconde extrémité.

7. Dispositif de fixation (16) selon la revendication 5 ou 6, dans lequel la longueur du doigt de verrouillage élastique (36, 52) le long de l'axe du doigt est 50 % à 80 % de la longueur totale de la cavité (24) le long de l'axe longitudinal (X).

8. Dispositif de fixation (16) selon l'une quelconque des revendications 1 à 6, dans lequel le doigt de verrouillage élastique (36, 52) présente une section transversale élargie à sa première extrémité (38).

9. Dispositif de fixation (16) selon l'une quelconque des revendications 1 à 8, dans lequel chaque ailette (44, 46) est cunéiforme et comprend un bord mince à une extrémité, le bord mince faisant face à la cavité (24) et étant adapté pour venir en contact avec le goujon (14), dans lequel l'espace (48) présente une section transversale en forme de V.

10. Dispositif de fixation (16) selon la revendication 9, dans lequel la distance entre le bord mince de la première ailette (44) et le bord mince de la seconde ailette (46) est comprise entre 0,5 mm et 2,0 mm et est, de préférence, de 1,8 mm.

11. Dispositif de fixation (16) selon l'une quelconque des revendications 1 à 10, dans lequel la seconde section de fixation (22) comprend une rainure (54) adaptée pour recevoir une pièce de fixation ou de recouvrement et, en particulier, la seconde section de fixation comprend deux rainures (54) pour recevoir une pièce d'accrochage ou de recouvrement.

12. Agencement (10) comprenant un dispositif de fixation (16) selon l'une quelconque des revendications 1 à 11, une partie de fixation ou de recouvrement (18) présentant une forme de C et adaptée pour être fixée à la seconde section de fixation (22), et une partie de support (12) avec un goujon (14), dans lequel le goujon (14) est agencé à l'intérieur de la cavité (24) et les ailettes (44, 46) et l'espace (48) saisissent le goujon (14).

13. Agencement (10) selon la revendication 12, dans lequel la languette élastique (70) fournie sur la surface extérieure du capuchon est une seconde languette élastique, et dans lequel une première languette élastique (53) s'étend depuis le corps principal (19) vers la partie de support (12).

14. Agencement (10) selon la revendication 12 ou 13, dans lequel le dispositif de fixation (16) comprend un premier et un second doigt de verrouillage élastique (36, 52) et dans lequel les ailettes maintiennent solidement le goujon (14) à l'intérieur de la cavité (24).
